(19) Europäisches Patentamt
European Patent Office
Office européen des brevets

(11) EP 4 296 703 A1

(12) DEMANDE DE BREVET EUROPEEN

(43) Date de publication:
27.12.2023 Bulletin 2023/52

(51) Classification Internationale des Brevets (IPC):
G01S 5/00 (2006.01)    G01S 5/02 (2010.01)
G01S 13/76 (2006.01)    G01S 13/87 (2006.01)
G01S 13/02 (2006.01)

(21) Numéro de dépôt: 23180775.1

(22) Date de dépôt: 21.06.2023

(52) Classification Coopérative des Brevets (CPC):
G01S 13/0209; G01S 13/765

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
KH MA MD TN

(30) Priorité: 22.06.2022 FR 2206198

(71) Demandeur: Sagemcom Broadband SAS
92270 Bois-Colombes (FR)

(72) Inventeurs:
• ABDO, Alexandre
92500 RUEIL MALMAISON (FR)
• SABATIER, Pierre
92500 RUEIL MALMAISON (FR)

(74) Mandataire: Lavaud, Thomas et al
Cabinet Boettcher
5, rue de Vienne
75008 Paris (FR)

(54) CONSTRUCTION D'UN REFERENTIEL D'ANCRES UWB

(57) Procédé de positionnement d'une ancre B dans un repère RA défini par une ancre A, l'ancre A et l'ancre B étant hors de portée UWB l'une de l'autre mais à portée Wi-Fi, le procédé de positionnement utilisant un équipement mobile (2) comprenant un module de communication UWB (5) et un module de communication Wi-Fi (10), le procédé de mesure comprenant les étapes de :
- évaluer, en utilisant des signaux UWB, une position $P_{MA}$ de l'équipement mobile (2) dans le repère RA ;
- évaluer une position $P_B$ de l'ancre B, en utilisant des signaux UWB si l'équipement mobile (2) est situé à portée UWB de l'ancre B, ou bien en utilisant des signaux Wi-Fi sinon ;
- déduire de la position $P_{MA}$ et de la position $P_B$ une position $P_{BA}$ de l'ancre B dans le repère RA.

Fig. 1

EP 4 296 703 A1

**Description**

L'invention concerne le domaine de la géolocalisation utilisant la technologie UWB.

ARRIERE PLAN DE L'INVENTION

La technologie UWB (pour *Ultra Wide Band,* que l'on peut traduire par Ultra Large Bande) permet notamment de localiser en intérieur, de manière extrêmement précise, un équipement mobile, par exemple un *smartphone,* une montre connectée, une tablette, etc.

La localisation UWB nécessite de créer un référentiel de positionnement qui est défini par une pluralité d'ancres UWB ayant des positions fixes. Les ancres UWB sont possiblement - mais pas nécessairement - intégrées dans des équipements capables de réaliser d'autres fonctions, et par exemple dans des enceintes connectées, des ordinateurs, etc.

Lorsque les ancres UWB sont à portée UWB l'une de l'autre, c'est-à-dire lorsque chaque ancre UWB se trouve dans les zones de couverture des autres ancres UWB, les ancres sont capables de se positionner automatiquement les unes par rapport aux autres et la création du référentiel de positionnement ne pose pas de problème. Cependant, lorsque deux ancres UWB ne sont pas à portée UWB l'une de l'autre, elles sont incapables de connaître précisément la distance qui les sépare, et le référentiel de positionnement ne peut pas être construit automatiquement.

OBJET DE L'INVENTION

L'invention a pour objet de positionner l'une par rapport à l'autre, automatiquement, deux ancres UWB qui ne sont pas à portée UWB l'une de l'autre.

RESUME DE L'INVENTION

En vue de la réalisation de ce but, on propose un procédé de positionnement d'une ancre B dans un repère RA défini à partir d'une position d'une ancre A, l'ancre A et l'ancre B étant des ancres UWB, qui comprennent chacune un module de communication UWB, qui sont intégrées chacune dans un équipement comprenant un module de communication Wi-Fi, et qui sont à portée Wi-Fi l'une de l'autre,
le procédé de positionnement utilisant un équipement mobile comprenant un module de communication UWB et un module de communication Wi-Fi, et qui est situé à portée UWB au moins de l'ancre A et à portée Wi-Fi de l'ancre A et de l'ancre B, le procédé de positionnement comprenant les étapes de :

- faire évaluer, par l'équipement intégrant l'ancre A, en utilisant des premiers signaux UWB, une position $P_{MA}$ de l'équipement mobile dans le repère RA ;
- faire évaluer, par l'équipement intégrant l'ancre A et/ou par l'équipement intégrant l'ancre B et/ou par l'équipement mobile, une position $P_B$ de l'ancre B, en utilisant des deuxièmes signaux UWB si l'équipement mobile est situé à portée UWB de l'ancre B, ou bien en utilisant des signaux Wi-Fi sinon ;
- déduire de la position $P_{MA}$ et de la position $P_B$ une position $P_{BA}$ de l'ancre B dans le repère RA.

Le procédé de positionnement selon des modes de réalisation utilise donc un équipement mobile, situé à portée UWB de l'ancre A, pour obtenir la position de l'ancre B dans le repère RA.

Si l'équipement mobile n'est pas situé à portée UWB de l'ancre B, la position de l'ancre B est obtenue en utilisant des signaux Wi-Fi.

Ainsi, l'ancre A et l'ancre B ne sont pas à portée UWB l'une de l'autre, mais le procédé de positionnement permet de combler cette lacune et de positionner précisément l'ancre B par rapport à l'ancre A en combinant la technologie UWB avec la technologie Wi-Fi.

On propose de plus un procédé de positionnement tel que précédemment décrit, dans lequel le repère RA est un repère polaire ayant pour pôle l'ancre A, et dans lequel la position $P_{MA}$ est une position polaire, l'équipement intégrant l'ancre A étant agencé pour déterminer des coordonnées polaires de l'équipement mobile dans le repère RA, et pour évaluer la position $P_{MA}$ à partir desdites coordonnées polaires.

On propose de plus un procédé de positionnement tel que précédemment décrit, dans lequel, si l'équipement mobile est situé à portée UWB de l'ancre B, la position $P_B$ est une position polaire $P_{MB}$ dans un repère RM qui est un repère polaire ayant pour pôle l'équipement mobile, l'équipement mobile étant alors agencé pour déterminer des coordonnées polaires de l'ancre B dans le repère RM, et pour évaluer la position $P_{MB}$ à partir desdites coordonnées polaires.

On propose de plus un procédé de positionnement tel que précédemment décrit, comprenant l'étape, pour obtenir la position $P_{BA}$, de déterminer des coordonnées polaires $(AB;\theta(N_A,AB))_{RA}$ de l'ancre B dans le repère RA.

On propose de plus un procédé de positionnement tel que précédemment décrit, dans lequel, si l'équipement mobile n'est pas situé à portée UWB de l'ancre B, la détermination de la position $P_B$ comprend les étapes de :

- faire mesurer par l'équipement intégrant l'ancre A ou par l'équipement intégrant l'ancre B, en utilisant des premiers signaux Wi-Fi, une distance $dist_{AB}$ entre l'ancre A et l'ancre B ;
- faire mesurer par l'équipement mobile ou par l'équipement intégrant l'ancre B, en utilisant des deuxièmes signaux Wi-Fi, une distance $dist_{MB}$ entre l'équipement mobile et l'ancre B ;
- évaluer la position $P_B$ à partir de la distance $dist_{AB}$ et de la distance $dist_{MB}$.

On propose de plus un procédé de positionnement tel que précédemment décrit, dans lequel l'évaluation de la position $P_B$ comprend les étapes de :

- déterminer des coordonnées cartésiennes de l'équipement mobile dans un repère cartésien ayant pour origine l'ancre A ;
- calculer, en utilisant les coordonnées cartésiennes de l'équipement mobile, le point d'intersection entre :

   ◦ un premier cercle ayant pour centre la position de l'ancre A et pour rayon la distance $dist_{AB}$ ;
   ◦ un deuxième cercle ayant pour centre la position de l'équipement mobile et pour rayon la distance $dist_{MB}$ ;
   ◦ un troisième cercle ayant pour centre une nouvelle position de l'équipement mobile suite à un déplacement de l'équipement mobile, et pour rayon une nouvelle distance $dist'_{MB}$ entre l'équipement mobile et l'ancre B suite au déplacement de l'équipement mobile.

On propose de plus un procédé de positionnement tel que précédemment décrit, dans lequel la distance $dist_{AB}$ et la distance $dist_{MB}$ sont estimées à partir de mesures de RSSI respectives.

On propose de plus un procédé de positionnement tel que précédemment décrit, dans lequel chaque module de communication UWB comprend deux antennes, ledit module de communication UWB étant ainsi capable de mesurer un angle entre une droite passant par ledit module de communication UWB et un autre module de communication UWB, et entre une droite orthogonale à un plan dans lequel s'étendent lesdites antennes, ledit angle formant une coordonnée angulaire de l'autre module de communication UWB dans un repère polaire ayant pour pôle ledit module de communication UWB.

On propose de plus un équipement électrique comprenant une ancre A, un module de communication Wi-Fi, et une unité de traitement, l'ancre A étant une ancre UWB, l'unité de traitement étant agencée pour :

- évaluer, en utilisant des premiers signaux UWB, une position $P_{MA}$ d'un équipement mobile dans un repère RA défini à partir d'une position de l'ancre A, l'équipement mobile pouvant comprendre un module de communication UWB et un module de communication Wi-Fi et pouvant être situé à portée UWB de l'ancre A et à portée Wi-Fi de l'ancre A ;
- faire évaluer, par l'équipement intégrant l'ancre A et/ou par un équipement intégrant une ancre B et/ou par l'équipement mobile, une position $P_B$ de l'ancre B, qui est aussi une ancre UWB et qui est à portée Wi-Fi de l'ancre A, en utilisant des deuxièmes signaux UWB si l'équipement mobile est situé à portée UWB de l'ancre B, ou bien en utilisant des signaux Wi-Fi sinon ;
- déduire de la position $P_{MA}$ et de la position $P_B$ une position $P_{BA}$ de l'ancre B dans le repère RA.

On propose de plus un équipement électrique tel que précédemment décrit, l'équipement électrique étant un extendeur Wi-Fi.

On propose de plus un équipement électrique tel que précédemment décrit, l'équipement électrique étant une passerelle résidentielle.

On propose de plus un équipement mobile comprenant un module de communication UWB, un module de communication Wi-Fi, et une unité de traitement, et qui est situé à portée UWB au moins d'une ancre A et à portée Wi-Fi de l'ancre A et d'une ancre B, l'ancre A et l'ancre B étant des ancres UWB, l'unité de traitement étant agencée pour :

- faire évaluer, par un équipement pouvant intégrer l'ancre A, en utilisant des premiers signaux UWB, une position $P_{MA}$ de l'équipement mobile dans un repère RA défini à partir d'une position de l'ancre A ;
- faire évaluer, par l'équipement pouvant intégrer l'ancre A et/ou par un équipement pouvant intégrer l'ancre B et/ou par l'équipement mobile, une position $P_B$ de l'ancre B, en utilisant des deuxièmes signaux UWB si l'équipement mobile est situé à portée UWB de l'ancre B, ou bien en utilisant des signaux Wi-Fi sinon ;
- déduire de la position $P_{MA}$ et de la position $P_B$ une position $P_{BA}$ de l'ancre B dans le repère RA.

On propose de plus un équipement mobile tel que précédemment décrit, l'équipement mobile étant un smartphone.

On propose de plus un équipement comprenant une unité de traitement agencée pour :

- faire évaluer par un équipement pouvant intégrer une ancre A, en utilisant des premiers signaux UWB, une position $P_{MA}$ d'un équipement mobile dans un repère RA défini à partir d'une position de l'ancre A ;
- faire évaluer, par l'équipement pouvant intégrer l'ancre A et/ou par un équipement pouvant intégrer une ancre B et/ou par l'équipement mobile, une position $P_B$ de l'ancre B, en utilisant des deuxièmes signaux UWB si l'équipement mobile est situé à portée UWB de l'ancre B, ou bien en utilisant des signaux Wi-Fi sinon ;
- déduire de la position $P_{MA}$ et de la position $P_B$ une position $P_{BA}$ de l'ancre B dans le repère RA,

l'ancre A et l'ancre B étant des ancres UWB qui peuvent être à portée Wi-Fi l'une de l'autre, l'équipement mobile pouvant comprendre un module de communication UWB et un module de communication Wi-Fi, et pouvant être situé à portée UWB au moins de l'ancre A et à portée Wi-Fi de l'ancre A et de l'ancre B.

On propose de plus un programme d'ordinateur comprenant des instructions qui conduisent l'unité de traitement de l'équipement tel que précédemment décrit à exécuter les étapes du procédé de positionnement tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés parmi lesquels :

[Fig. 1] la figure 1 représente des ancres UWB et un smartphone ;
[Fig. 2] la figure 2 illustre la méthode du Two Way Ranging ;
[Fig. 3] la figure 3 représente les deux antennes d'un module de communication UWB, et la droite normale au module ;
[Fig. 4] la figure 4 représente l'ancre A, l'ancre B et le smartphone, alors que celui-ci est à portée UWB de l'ancre A et de l'ancre B ;
[Fig. 5] la figure 5 est une figure similaire à la figure 4, alors que le smartphone n'est pas à portée UWB de l'ancre B, et alors qu'il y a deux possibilités de position pour l'ancre B ;
[Fig. 6] la figure 6 est une figure similaire à la figure 5, qui montre un troisième cercle permettant de localiser l'ancre B ;
[Fig. 7] la figure 7 est une figure similaire à la figure 5, alors qu'il n'y a qu'une seule possibilité de position pour l'ancre B.

DESCRIPTION DETAILLEE DE L'INVENTION

L'invention a pour but de créer automatiquement un référentiel de positionnement permettant de mettre en oeuvre une localisation *indoor* (en intérieur) qui utilise la technologie UWB.

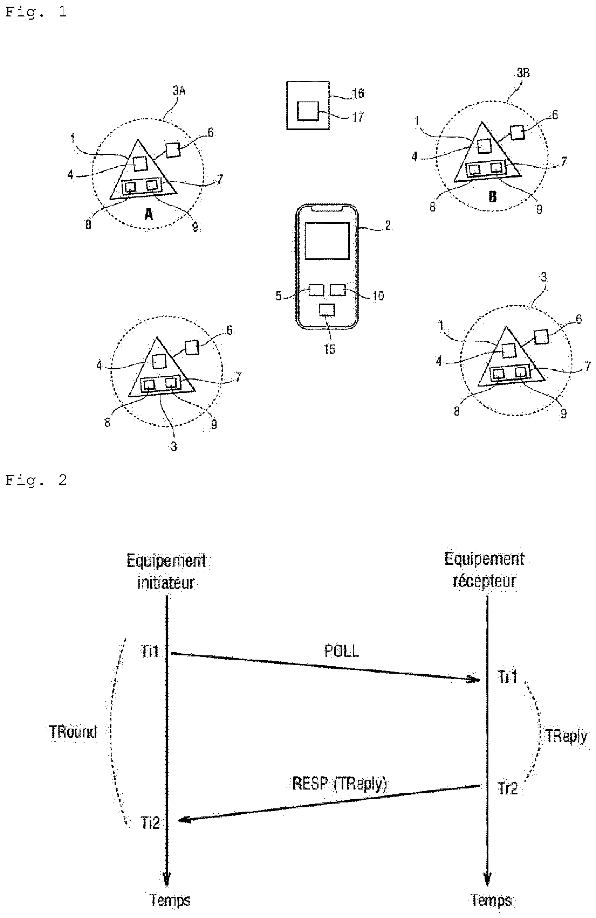

En référence à la figure 1, le référentiel de positionnement est défini par une pluralité d'ancres UWB 1 et peut être utilisé pour géolocaliser un équipement mobile 2, qui est ici par exemple un smartphone.

Les ancres UWB 1 peuvent être intégrées dans des équipements individuels distincts, remplissant uniquement cette fonction d'ancre. Cependant, ici, chaque ancre UWB est intégrée dans un équipement 3 distinct remplissant au moins une autre fonction. Les équipements 3 comprennent par exemple un ou des extendeurs Wi-Fi, un ou des points d'accès, une ou des passerelles résidentielles, une ou des enceintes connectées, un ou des assistants vocaux, un ou des boîtiers décodeurs, etc.

Chaque ancre UWB 1 intègre un module de communication UWB 4, qui est par exemple le composant DECAWAVE DW3000. Le module de communication 4 comprend deux antennes.

Le smartphone 2 comprend lui aussi un module de communication UWB 5, qui est par exemple semblable à celui des ancres UWB 1.

On décrit brièvement la manière dont fonctionne la géolocalisation du smartphone 2.

L'UWB est une technologie radio permettant des mesures de distances et d'angles entre deux équipements émetteurs-récepteurs.

La mesure de la distance entre les deux équipements peut être obtenue par la technique du TOF (pour *Time of Flight,* ou Temps de Vol), qui consiste à mesurer le temps de propagation d'un signal radioélectrique impulsionnel à large bande. Ce signal a la propriété de voyager en ligne droite et de franchir les obstacles d'un environnement rencontré dans une habitation, ou, plus généralement, dans un bâtiment quelconque.

Connaissant la vitesse d'une onde électromagnétique (et donc du signal radioélectrique) et ce temps de propagation, il est possible de déterminer la distance entre les deux équipements.

On utilise donc un réseau établi de points fixes (les ancres UWB 1), qui forme un référentiel de positionnement, et on localise précisément le smartphone 2 en position absolue par rapport audit référentiel de positionnement.

La position du smartphone 2 se trouve à l'intersection des sphères centrées sur chaque ancre UWB 1. Le rayon d'une sphère centrée sur une ancre UWB 1 correspond à la distance, calculée à partir du temps de vol du signal UWB, entre le smartphone 2 et ladite ancre UWB 1.

La détermination du point d'intersection des sphères permet de connaître la position du smartphone 2.

Cette technique du ToF peut être réalisée en utilisant la méthode du TWR (pour *Two Way Ranging,* que l'on pourrait traduire par mesure de distance aller-retour). En référence à la figure 2, dans cette méthode, un équipement initiateur envoie un premier message « POLL », et un équipement récepteur répond, un temps précis après l'émission, en émettant un deuxième message « RESP ». L'équipement initiateur soustrait alors, au temps **TRound** entre l'émission du premier message et la réception du deuxième message, le temps de réponse **TReply** (connu) de l'équipement récepteur.

L'équipement initiateur obtient ainsi le temps de propagation de deux ondes. L'équipement initiateur calcule alors :

$$ToF = \frac{(TRound - TReply)}{2}$$

La distance entre l'équipement initiateur et l'équipement récepteur est obtenue par la formule :

$$Distance = ToF \times c$$

(où c est la célérité).

On a vu que les modules de communication UWB 4, 5 comprennent chacun deux antennes.

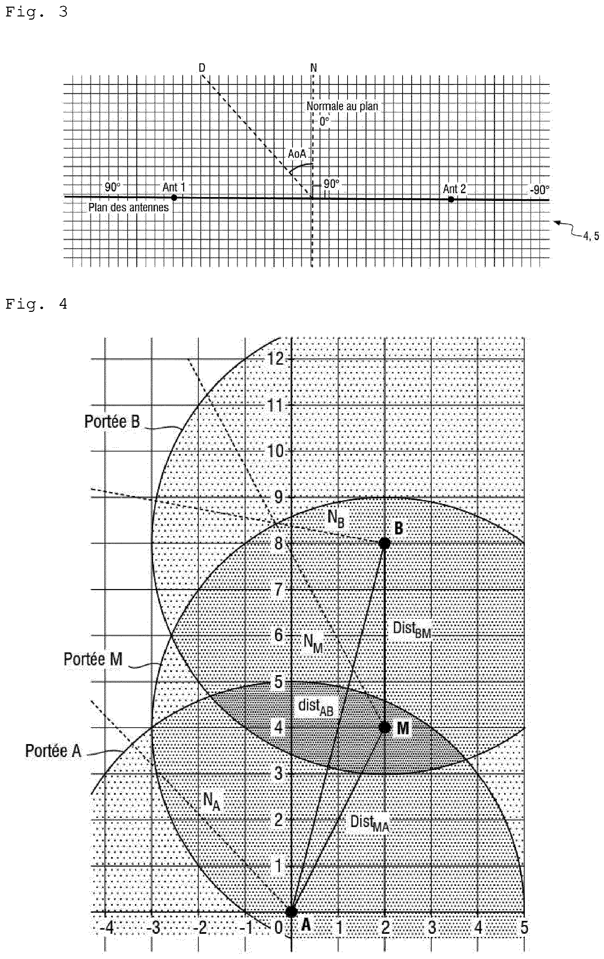

En référence à la figure 3, chaque module de communication UWB 4 ou 5 d'un équipement (ancre ou smartphone) est donc capable de mesurer l'angle d'arrivée **(AoA),** qui est l'angle entre :

- la droite D reliant ledit module de communication UWB et un autre module de communication UWB d'un autre équipement ;
- la droite N normale audit module de communication UWB, c'est à dire une droite imaginaire orthogonale au plan dans lequel s'étendent les deux antennes UWB Ant1, Ant2 dudit module de communication UWB.

Cet angle **AoA** est calculé grâce à une mesure du déphasage de la porteuse du signal reçu entre les deux antennes Ant1, Ant2, ou PDoA (pour *Phase Difference of Arrival,* que l'on pourrait traduire par différence de phase d'arrivée). Ce déphasage correspond à une faible différence de distance entre la mesure de distance obtenue via une antenne Ant1 et la mesure de distance obtenue via l'autre antenne Ant2.

Le PDoA est lié à l'angle d'arrivée **(AoA)** par cette équation :

$$AoA = arcsin\left(\frac{PDoA \times \lambda}{2\pi d}\right)$$

où :

- $\lambda$ est la longueur d'onde de la porteuse du signal UWB ;
- d est la distance entre les antennes Ant1, Ant2.

On s'intéresse maintenant à nouveau au référentiel de positionnement.

Parmi les ancres UWB, on trouve une ancre A et une ancre B.

On considère que l'ancre A et l'ancre B ont des positions fixes. Bien sûr, les positions de l'ancre A et de l'ancre B peuvent être modifiées (notamment si elles sont intégrées dans des équipements mobiles tels qu'une enceinte portative) - dans ce cas, un référentiel de positionnement peut être créé à nouveau. Le procédé de positionnement décrit ici est donc mis en oeuvre alors que les positions de l'ancre A et de l'ancre B ne varient pas. Dans un exemple, les positions de l'ancre A et de l'ancre B ne varient pas pendant une durée de temps correspondant aux temps nécessaires à l'échange et au traitement de signaux UWB et/ou de signaux Wi-Fi. Dans un autre exemple, les positions de l'ancre A et de l'ancre B ne varient pas pendant une durée de temps correspondant au temps de déplacement du smartphone 2. Cette durée peut être par exemple dans l'ordre de grandeur de la minute.

Dans un mode de réalisation, l'ancre A et l'ancre B sont positionnées à portée UWB l'une de l'autre. Le smartphone 2 coopère alors avec les ancres pour déterminer précisément la distance entre l'ancre A et l'ancre B et pour positionner de manière absolue l'ancre A et l'ancre B.

Dans un autre mode de réalisation, l'ancre A et l'ancre B sont positionnées hors de portée UWB l'une de l'autre : l'ancre A n'appartient pas à la zone de couverture UWB de l'ancre B, et/ou l'ancre B n'appartient pas à la zone de couverture de l'ancre A. Par conséquent, la technologie UWB n'est pas utilisable pour déterminer précisément et directement la distance entre l'ancre A et l'ancre B et pour positionner de manière absolue l'ancre A et l'ancre B.

L'ancre A est intégrée dans un équipement 3A. L'ancre B est intégrée dans un équipement 3B.

Les équipements 3A, 3B dans lesquels sont respectivement intégrées les ancres A et B, comprennent chacun un module de communication sans-fil opérant par exemple selon l'un des standards de la famille des standards 802.11 de l'*Institute of Electrical and Electronics Engineers* « IEEE », comme par exemple le standard IEEE 802.11ax, aussi désigné sous l'appellation Wi-Fi 6. On parlera donc de « module de communication Wi-Fi 6 ». Dans les termes « technologie Wi-Fi », « communication(s) Wi-Fi », « portée Wi-Fi », « signaux Wi-Fi », « extendeur Wi-Fi », etc., il est entendu par la désignation « Wi-Fi » une référence à l'un des standards 802.11 a / b / g / n / ac / ax / be, ainsi qu'aux amendements au standard 802.11 tels que définis par l'IEEE.

Ici, l'ancre A et l'ancre B sont chacune intégrées dans un extendeur Wi-Fi (distinct).

L'ancre A et l'ancre B sont à portée Wi-Fi l'une de l'autre.

Des modes de réalisation permettent de pallier l'absence de lien fonctionnel UWB entre l'ancre A et l'ancre B en utilisant la technologie Wi-Fi, qui permet l'obtention d'une information de distance entre les deux ancres.

On décrit tout d'abord rapidement la manière dont peut être estimée une distance entre deux équipements munis chacun d'un module de communication Wi-Fi.

La technologie Wi-Fi est une technologie radio utilisée pour le transfert de données.

Il est possible d'estimer des distances via la technologie Wi-Fi en utilisant la métrique du RSSI (pour *Received Signal Strength Indicator,* que l'on peut traduire par indicateur de la puissance du signal reçu).

En effet, cette mesure dépend de la puissance émise, du gain des antennes de l'équipement émetteur et de l'équipement récepteur, ainsi que de la distance $D$ les séparant, suivant les règles d'atténuation en espace libre. On obtient l'équation suivante :

$$D = 10^{\frac{FSPL - K - 20 \times \log(f)}{20}}$$

où :

- $D$ est la distance en mètres ;
- $k$ = -27,55 ;
- $f$ est la fréquence en MHz du signal Wi-Fi ;
- $FSPL$ est la perte de chemin en espace libre, qui peut être estimée selon la fonction :

$$FSPL = Ptx - Cltx + Agtx + Agrx - Clrx - Prx - Fm$$

où :

- $Ptx$ est la puissance émise ;
- $Agtx, Agrx$ sont les gains respectifs de l'antenne de l'équipement émetteur et de l'équipement récepteur ;
- $Prx$ est la puissance reçue (estimée via le RSSI) ;
- $Cltx, Clrx$ sont les pertes de câble ;
- $Fm$ est une marge de protection contre l'évanouissement.

On note que cette mesure peut être remplacée par l'une des méthodes définies dans la norme 802.11az appartenant à la famille des standards IEEE 802.11 et certifiés par la Wi-Fi Alliance sous le nom Wi-Fi location.

Cette norme propose de mesurer le ToF des signaux Wi-Fi de manière similaire à la méthode utilisant l'UWB, via des échanges de type *« round-trip measurements »* (que l'on peut traduire par mesures aller-retour). Cette méthode fonctionne de manière quasiment identique au TWR. Ces mesures seraient effectuées sous forme de « burst » (c'est-à-dire en mode rafale) pour obtenir une mesure de distance plus fiable.

Un mode de réalisation est ici mis en oeuvre dans l'ancre A.

L'ancre A intègre une unité de traitement 7. L'unité de traitement comprend un ou plusieurs composants de traitement 8, et par exemple un processeur ou un microprocesseur quelconque(s), généraliste(s) ou spécialisé(s) (par exemple un DSP, pour *Digital Signal Processor),* un microcontrôleur, ou bien un circuit logique programmable tel qu'un FPGA (pour *Field Programmable Gate Arrays)* ou un ASIC (pour *Application Spécifie Integrated Circuit).* L'unité de traitement comprend aussi une ou des mémoires 9. Au moins l'une de ces mémoires forme un support d'enregistrement lisible par ordinateur, sur lequel est enregistré au moins un programme d'ordinateur comprenant des instructions qui conduisent l'unité de traitement 7 à exécuter au moins certaines des étapes du procédé de positionnement selon des modes de réalisation.

On suppose ici (même si cela n'est pas nécessaire) que chacune des ancres UWB 1 intègre une unité de traitement 7 semblable à celle qui vient d'être décrite.

Le procédé de positionnement utilise un équipement mobile, par exemple le smartphone 2, qui, comme on l'a vu, comprend lui aussi un module de communication UWB 5, et qui par ailleurs comprend aussi un module de communication Wi-Fi 10. La position du smartphone 2 peut bien sûr varier par rapport aux ancres A et B. On nomme A, B, M les positions respectives de l'ancre A, de l'ancre B et du smartphone 2.

On suppose que les portées respectives de ces radios sont symétriques : l'ancre A se trouve dans la zone de couverture UWB (respectivement Wi-Fi) du smartphone 2 équivaut au fait que le smartphone 2 se trouve dans la zone de couverture UWB (respectivement Wi-Fi) de l'ancre A.

En effet, en ce qui concerne la technologie Wi-Fi, les appareils utilisant cette technologie doivent être capables de communiquer des données entre eux, les équipements sont donc systématiquement à portée l'un de l'autre.

En ce qui concerne la technologie UWB, les mesures de distances via des mesures de ToF nécessitent au minimum deux messages allant dans deux direction (de l'ancre vers le smartphone, puis du smartphone vers l'ancre par exemple).

En se basant sur ces informations, il est possible d'obtenir du smartphone 2, à chaque instant, au moyen de la technologie Wi-Fi, le niveau RSSI correspondant à sa vision de chacune des ancres A et B (respectivement $RSSI_{MA}$ et $RSSI_{MB}$). Il est également possible d'obtenir le RSSI correspondant à la vision mutuelle des ancres entre elles ($RSSI_{AB}$).

Il est donc possible, en utilisant la technologie Wi-Fi, de mesurer la distance $dist_{MA}$ entre le smartphone 2 et l'ancre A, la distance $dist_{MB}$ entre le smartphone 2 et l'ancre B, et la distance $dist_{AB}$ entre l'ancre A et l'ancre B.

Comme on l'a vu, $dist_{MA}$ est estimée à partir de $RSSI_{MA}$, $dist_{MB}$ est estimée à partir de $RSSI_{MB}$, et $dist_{AB}$ est estimée à partir de $RSSI_{AB}$.

De la même manière il est possible d'obtenir du smartphone 2, au moyen de la technologie UWB, la distance absolue séparant le smartphone 2 de chacune des ancres A, B ($Dist_{MA}$ et $Dist_{MB}$) - à condition que le smartphone 2 soit à portée UWB desdites ancres. Il est également possible d'obtenir l'angle absolu d'arrivée du signal en provenance du smartphone 2 sur chacune des ancres A, B ($Angle_{MA}$ et $Angle_{MB}$) - à condition que le smartphone 2 soit à portée UWB desdites ancres.

De manière réciproque, il est possible de connaître les angles mesurés par le smartphone 2 via la technologie UWB ($Angle_{AM}$ et $Angle_{BM}$) - à condition que le smartphone 2 soit à portée UWB desdites ancres.

Pour un couple d'équipements X, Y, par « $Angle_{XY}$ », on entend l'angle entre la droite reliant les modules de communication UWB des équipements X et Y, et la droite normale au module de communication UWB intégré dans l'équipement Y (voir explications fournies plus tôt).

On remarque aussi que l'on utilise le terme $Dist_{XY}$ pour la distance entre les équipements X et Y lorsqu'elle est mesurée en utilisant la technologie UWB, et le terme $dist_{XY}$ lorsqu'elle est mesurée en utilisant la technologie Wi-Fi.

On suppose que le smartphone 2 est situé à portée UWB au moins de l'ancre A et à portée Wi-Fi de l'ancre A et de l'ancre B.

On décrit tout d'abord, en référence à la figure 4, la mise en oeuvre du procédé de positionnement dans le cas où le smartphone 2 est situé à la fois à portée UWB de l'ancre A et de l'ancre B.

On note, sur les figures 4 à 7, Portée A la portée UWB de l'ancre A, Portée B la portée UWB de l'ancre B, et Portée M la portée UWB du smartphone 2.

Il est donc possible, en utilisant la technologie UWB, de mesurer : la distance $Dist_{MA}$ entre le smartphone 2 et l'ancre A, la distance $Dist_{MB}$ entre le smartphone 2 et l'ancre B, ainsi que les angles $Angler_{MA}$, Angles, $Angles_{AM}$ et $Angle_{BM}$.

Il est aussi possible, en utilisant la technologie Wi-Fi, de mesurer la distance $dist_{MA}$ entre le smartphone 2 et l'ancre A, la distance $dist_{MB}$ entre le smartphone et l'ancre B, et la distance distAB entre l'ancre A et l'ancre B.

Ces mesures permettent de produire des coordonnées polaires.

L'unité de traitement 7 de l'équipement 3A, et donc de l'ancre A, évalue donc, en utilisant des premiers signaux UWB, une position $P_{MA}$ du smartphone 2 dans un repère RA qui est défini à partir de la position de l'ancre A. Le repère RA est ici un repère polaire ayant pour pôle (origine) l'ancre A.

La position $P_{MA}$ est donc une position polaire. L'ancre A détermine les coordonnées polaires du smartphone 2 dans le repère Ra puis évalue la position $P_{MA}$ à partir desdites coordonnées polaires.

Les coordonnées polaires du smartphone 2 sont formées par le couple : $(AM, \theta(N_A, AM))_{RA}$.

$AM$ est donc la coordonnée radiale du smartphone 2 dans le repère RA et est égale à $Dist_{MA}$.

$\theta(N_A, AM)$ est la coordonnée angulaire du smartphone 2 dans le repère RA, qui est égale à l'angle entre la droite (AM) et l'axe polaire $N_A$ (correspondant à la droite normale au module de communication UWB de l'ancre A), et donc à $Angle_{MA}$.

On note qu'il est possible de convertir ces coordonnées polaires en coordonnées cartésiennes dans un repère ayant pour origine la position de l'ancre A.

Un repère polaire permet de caractériser une position grâce à une distance par rapport à un point d'origine, et un angle par rapport à un axe passant par ce point.

Les coordonnées polaires s'écrivent : $(\rho, \theta)$

où :

- $\rho$ est la coordonnée radiale, c'est à dire la distance par rapport au pôle du repère ;
- $\theta$ est la coordonnée angulaire, c'est à dire l'angle avec l'axe polaire.

En considérant que l'axe polaire correspond à l'axe des abscisses, et que l'axe des ordonnées a un angle directionnel de +90°, la conversion de coordonnées polaires en coordonnées cartésiennes s'effectue suivant :

$$X = \rho \times cos(\theta)$$

$$Y = \rho \times sin(\theta)$$

Le smartphone 2 peut mesurer les distances $Dist_{MA}$ et $Dist_{MB}$, ainsi que les angles $Angle_{AM}$ et $Angle_{BM}$. Ces informations forment des positions polaires autour de M. Suivant la méthode précédemment définie, il est possible de convertir ces positions dans le repère RM en positions dans le repère RA, et donc d'étendre le repère de A à la zone de couverture M.

Puis, l'unité de traitement 7 de l'ancre A fait évaluer, par l'équipement 3A intégrant l'ancre A et/ou par l'équipement 3B intégrant l'ancre B et/ou par le smartphone 2, une position $P_B$ de l'ancre B, en utilisant des deuxièmes signaux UWB si le smartphone 2 est situé à portée UWB de l'ancre B, ou bien en utilisant des signaux Wi-Fi sinon.

Ici, l'unité de traitement 7 fait évaluer par le smartphone 2 une position $P_B$ de l'ancre B, en utilisant des deuxièmes signaux UWB.

La position $P_B$ est en l'occurrence une position polaire $P_{MB}$ dans un repère RM qui est un repère polaire ayant pour pôle le point M (la position du smartphone 2).

Le smartphone 2 détermine les coordonnées polaires de l'ancre B dans le repère RM puis évalue la position $P_{MB}$ à partir desdites coordonnées polaires.

Les coordonnées polaires de l'ancre B dans le repère RM sont formées par le couple : $(MB, \theta(N_M, MB))_{RM}$.

$MB$ est donc la coordonnée radiale de l'ancre B dans le repère RM et est égale à $Dist_{BM}$.

$\theta(N_M, MB)$ est la coordonnée angulaire de l'ancre B dans le repère RM, qui est égale à l'angle entre la droite (MB) et l'axe polaire $N_M$ (correspondant à la droite normale au module de communication UWB du smartphone), et donc à $Angle_{BM}$.

A nouveau, il est possible de convertir ces coordonnées polaires en coordonnées cartésiennes dans un repère ayant pour origine le smartphone 2.

Puis, l'unité de traitement 7 de l'ancre A convertit la position polaire de l'ancre B dans le repère RM, en une position polaire de l'ancre B dans le repère RA, en réalisant une conversion de repère polaire-polaire.

On sait que la position polaire $M$ du smartphone 2 dans les repères RA puis RM est telle que :

$$M = (AM; \theta(N_A, AM))_{RA} = (0; 0)_{RM}$$

La position polaire A de l'ancre A dans les repères RA puis RM est telle que :

$$A = (0; 0)_{RA} = (AM; \theta(N_M, MA))_{RM}$$

La position polaire $B$ de l'ancre B dans les repères RA puis RM est telle que :

$$B = (AB; \theta(N_A, AB))_{RA} = (BM; \theta(N_M, MB))_{RM}$$

Pour connaître la position de l'ancre B dans le repère RA, l'unité de traitement 7 de l'ancre A calcule donc :

$$\widehat{AMB} = -\theta(N_M, MA) + \theta(N_M, MB)$$

$$AB = \sqrt{AM^2 + MB^2 - 2 \times AM \times MB \times \cos(\widehat{AMB})}$$

$$\widehat{BAM} = acos\left((AB^2 + AM^2 - MB^2)/(2 \times AB \times AM)\right)$$

$$\theta(N_A, AB) = \theta(N_A, AM) - \widehat{BAM},$$

où :

$AB$ est la coordonnée radiale de l'ancre B dans le repère RA, $AM$ est la coordonnée radiale du smartphone 2 dans le repère RA, $MB$ est la coordonnée radiale de l'ancre B dans le repère RM, $\theta(N_M, MA)$ est la coordonnée angulaire de l'ancre A dans le repère RM, $\theta(N_M, MB)$ est la coordonnée angulaire de l'ancre B dans le repère RM, $\theta(N_A, AB)$ est la coordonnée angulaire de l'ancre B dans le repère RA, $\theta(N_A, AM)$ est la coordonnée angulaire du smartphone 2 dans le repère RA.

Il est donc possible de positionner le smartphone 2 selon l'ancre A, et de positionner l'ancre B par rapport au smartphone 2. On étend ainsi le repère déployé par l'ancre A jusqu'à la portée UWB du smartphone 2.

On se place maintenant dans le cas où le smartphone 2 n'est pas situé à portée UWB de l'ancre B - et est donc situé à portée UWB uniquement de l'ancre A.

Il est donc possible, en utilisant la technologie UWB, de mesurer : la distance $Dist_{MA}$ entre le smartphone 2 et l'ancre A, ainsi que les angles $Angle_{MA}$ et Angles.

Il est aussi possible, en utilisant la technologie Wi-Fi, de mesurer la distance $dist_{MA}$ entre le smartphone 2 et l'ancre A, la distance $dist_{MB}$ entre le smartphone 2 et l'ancre B, et la distance $dist_{AB}$ entre l'ancre A et l'ancre B.

Dans cette situation, l'unité de traitement 7 de l'ancre A évalue, en utilisant des premiers signaux UWB, une position $P_{MA}$ du smartphone 2 dans le repère RA (qui est à nouveau un repère polaire ayant pour pôle l'ancre A). La position $P_{MA}$ est donc une position polaire.

Le smartphone 2 peut mesurer la distance $Dist_{MA}$ et l'angle $Angle_{AM}$. Il est possible de convertir ces positions dans le repère RM en positions dans le repère RA, et donc d'étendre le repère de A à la zone de couverture du smartphone 2.

Le procédé consiste alors à faire évaluer, par l'équipement 3A intégrant l'ancre A et/ou par l'équipement 3B intégrant l'ancre B et/ou par le smartphone 2, une position $P_B$ de l'ancre B, en utilisant des deuxièmes signaux UWB si le smartphone 2 est situé à portée UWB de l'ancre B, ou bien en utilisant des signaux Wi-Fi sinon.

Ici, le procédé consiste donc à faire évaluer une position $P_B$ de l'ancre B en utilisant des signaux Wi-Fi. L'unité de traitement 7 de l'ancre A mesure ainsi, en utilisant des premiers signaux Wi-Fi, la distance $dist_{AB}$ entre l'ancre A et l'ancre B. Alternativement, l'ancre A pourrait piloter l'ancre B pour que celle-ci réalise cette mesure.

L'unité de traitement 7 de l'ancre A pilote alors le smartphone 2 pour que celui-ci mesure, en utilisant des deuxièmes signaux Wi-Fi, une distance $dist_{MB}$ entre le smartphone 2 et l'ancre B. Alternativement, cette mesure pourrait être effectuée par l'ancre B.

L'unité de traitement 7 évalue alors la position $P_B$ à partir de la distance $dist_{AB}$ et de la distance $dist_{MB}$.

La distance $dist_{AB}$ permet en effet de dessiner un premier cercle imaginaire CA autour de l'ancre A, représentant toutes les positions possibles pour l'ancre B selon cette mesure. De même, la distance $dist_{MB}$ permet de dessiner un deuxième cercle imaginaire CM autour de M, représentant toutes les positions possibles pour l'ancre B selon cette mesure.

Les intersections de ces cercles imaginaires correspondent aux seules positions possibles pour l'ancre B, qui sont les positions B1 et B2.

On explique tout d'abord comment ces positions peuvent être déterminées.

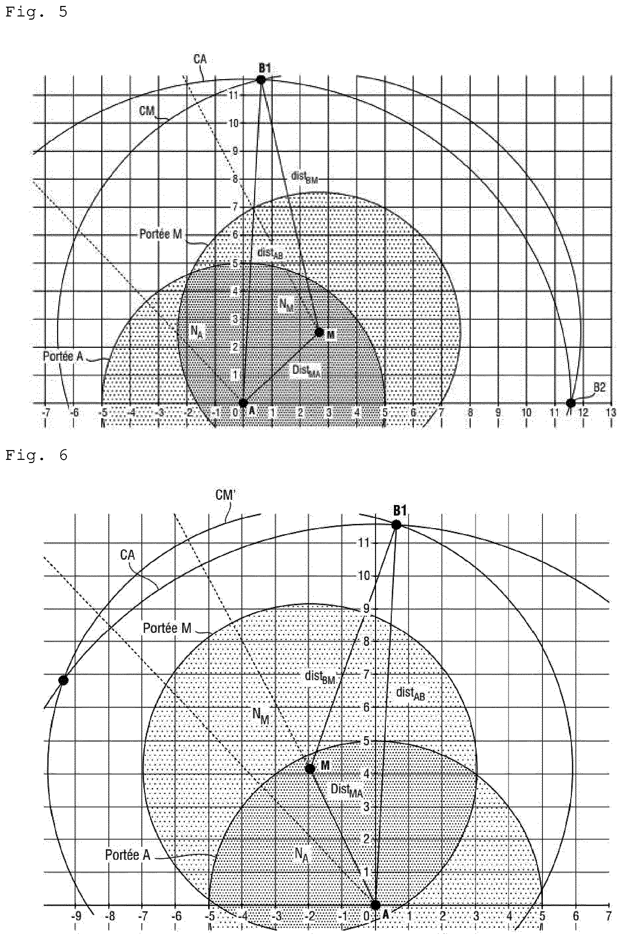

En référence à la figure 5, on nomme $CA$ le cercle de centre $A$ et de rayon $R,$ et $CM$ le cercle de centre $M$ et de rayon *r.*

On place par exemple le point **A** à l'origine du repère utilisé.

L'ancre A calcule des coordonnées cartésiennes du smartphone 2 dans un repère cartésien ayant pour origine l'ancre A (par exemple à partir des coordonnées polaires, comme cela est expliqué plus haut).

L'équation du cercle **CA** est :

$$CA : (x - Ax)^2 + (y - Ay)^2 = R^2$$

Par définition, ici **Ax** = **Ay** = 0 car **A** est l'origine du repère A.

L'équation du cercle CM est :

$$CM : (x - Mx)^2 + (y - My)^2 = r^2$$

(**Mx**; **My**) sont les coordonnées cartésiennes du point **M** dans le repère cartésien ayant pour origine l'ancre A.

On détermine les couples (*x*,*y*) qui résolvent ce système d'équation. On a :

*CA*:

$$R^2 = x^2 + y^2$$

*CM*:

$$r^2 = x^2 - 2 * x * Mx + Mx^2 + y^2 - 2 \times y \times My + My^2$$
$$= x^2 + y^2 - 2 \times x \times Mx - 2 \times y \times My + Mx^2 + My^2$$

Par substitution, on a :

*CM*:

$$0 = R^2 - r^2 - 2 \times x \times Mx - 2 \times y \times My + Mx^2 + My^2$$

On pose :

$$a = 2 \times Mx, \ b = 2 \times My, \ \text{et}, \ c = Mx^2 + My^2 - r^2 + R^2$$

On obtient :

*CM*:

$$a \times x + b \times y - c = 0 \ \leftrightarrow \ b \times y = c - a \times x$$

*CM*:

$$b^2 \times y^2 = c^2 + a^2 \times x^2 - 2 \times a \times c \times x$$

Par substitution avec **CA**, on a :

*CM*:

$$b^2 \times (R^2 - x^2) = c^2 + a^2 \times x^2 - 2 \times a \times c \times x$$

*CM*:

$$0 = (a^2 + b^2) \times x^2 - (2 \times a \times c) \times x + (c^2 - b^2 \times R^2)$$

On pose donc $\Delta = (2 \times a \times c)^2 - 4 \times (a^2 + b^2) \times (c^2 - b^2 \times r^2)$

Si $\Delta > 0$, il y a deux solutions :

$$X1 = \frac{2 \times a \times c - \sqrt{\Delta}}{2 \times (a^2 + b^2)}$$

$$X2 = \frac{2 \times a \times c + \sqrt{\Delta}}{2 \times (a^2 + b^2)}$$

$$Y1 = c - (a \times X1)$$

$$Y2 = c - (a \times X2)$$

Les solutions sont donc **(X1, Y1),** qui sont les coordonnées de B1, et et (X2, Y2), qui sont les coordonnées de B2.

Si $\Delta = 0$, il y a une solution :

$$X = \frac{a \times c}{a^2 + b^2}$$

$$Y = c - (a \times X)$$

La solution est donc le point (unique) B1 de coordonnées (X, Y).

Ainsi, pour déterminer la position de l'ancre B, l'unité de traitement 7 de l'ancre A calcule $\Delta$, puis, si $\Delta > 0$, l'unité de traitement calcule **X1, X2, Y1, Y2.**

Les solutions sont donc le point B1 de coordonnées **(X1, K1)** et le point B2 de coordonnées (X2, Y2) : c'est la situation de la figure 5.

On voit donc que si $\Delta > 0$, il n'est pas possible pour l'unité de traitement 7 de déterminer quelle intersection correspond à la position de l'ancre B - puisque deux positions B1 et B2 sont possibles.

En référence à la figure 6, l'unité de traitement 7 utilise donc un troisième cercle imaginaire **CM',** qui est défini suite à un changement de position du smartphone 2 (toujours dans la zone de couverture UWB de l'ancre A).

L'un des points d'intersection des premier et deuxième cercles n'aura pas changé de position avec le mouvement du smartphone 2. Autrement dit, les trois cercles ainsi créés se croisent nécessairement à un même point.

L'unité de traitement 7 attend donc que le smartphone 2 change de position, ou bien communique (par exemple via le smartphone 2) à l'utilisateur du smartphone pour que celui-ci change de position (et le smartphone 2 avec lui).

Lorsque la position du smartphone 2 a changé, l'unité de traitement 7 fait mesurer à nouveau, par le smartphone 2 ou par l'ancre B, en utilisant des troisièmes signaux Wi-Fi, une distance dist'$_{MB}$ entre le smartphone et l'ancre B. La position P$_B$ est alors évaluée à partir de la distance dist$_{AB}$, de la distance dist$_{MB}$ et de la distance dist'$_{MB}$.

L'unité de traitement 7 définit le troisième cercle imaginaire **CM',** qui a pour centre la nouvelle position du smartphone 2 et pour rayon la distance dist'$_{MB}$, puis calcule le point où se croisent le premier cercle ayant pour centre la position de l'ancre A et pour rayon la distance dist$_{AB}$, le deuxième cercle ayant pour centre la position du smartphone 2 et pour rayon la distance dist$_{MB}$, et le troisième cercle ayant pour centre une nouvelle position du smartphone 2 suite à un déplacement du smartphone 2, et pour rayon une nouvelle distance dist'$_{MB}$ entre le smartphone 2 et l'ancre B suite au déplacement du smartphone 2.

L'unité de traitement 7 en déduit le point qui correspond à la position de l'ancre B : il s'agit ici du point B1.

Dans les cas où Δ = 0, il n'y a qu'une intersection entre le premier cercle **CA** et le deuxième cercle **CM,** qui correspond à la position $P_B$ de l'ancre B.

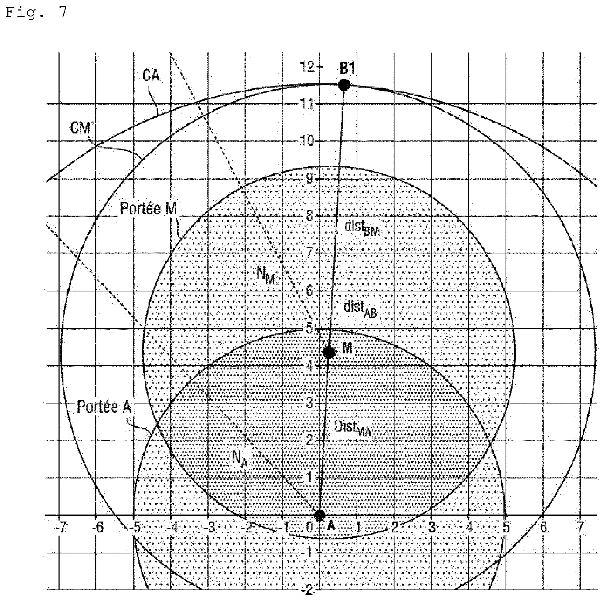

Cependant, les cercles sont très proches à proximité de ce point et il est possible que la qualité des mesures Wi-Fi ne permettent pas une résolution suffisante : c'est le cas de la figure 7.

Comme précédemment, l'unité de traitement 7 fait calculer la distance dist'$_{MB}$ entre le smartphone 2 et l'ancre B après que le smartphone a changé de position, et calcule le point d'intersection des trois cercles.

La position de l'ancre B est donc connue dans le repère cartésien ayant pour origine l'ancre A.

Dans les modes de réalisation décrits, il peut arriver que l'unité de traitement 7 de l'ancre A pilote le smartphone ou l'ancre B pour que celui-ci ou celle-ci réalise des mesures (de position ou de distance).

L'ancre A doit donc communiquer avec le smartphone ou avec l'ancre B pour les piloter.

Pour transmettre les commandes (c'est à dire la demande de mesure), différents protocoles web sont utilisables, et par exemple : MQTT, Websockets, http, etc. On utilise dans ce cas le WiFi comme réseau.

Une autre possibilité est de définir un message UWB dédié à cette commande.

Le protocole MQTT peut être utilisé. Dans ce protocole, des clients (ici les ancres et le smartphone) se connectent à un serveur « *broker* » (que l'on peut traduire par « courtier de message ») via son adresse IP ou une URL. Ce serveur peut être hébergé par une ou des ancres, un autre appareil, ou dans le *cloud.*

Chaque client peut ensuite s'abonner à des « *Topics »,* (sujets) et diffuser des informations dans d'autres topics (chaque topic est représenté par un nom).

Lorsqu'un message est diffusé dans un topic, le broker le redistribue à tous les clients qui y sont abonnés.

Ces messages contiennent en général du texte, et il est donc possible de partager des données formatées (par exemple en JSON).

On peut donc imaginer un système dans lequel chaque ancre et le smartphone sont abonnés à un certain nombre de topics, dont un qui permet de les identifier de manière unique, et dans lequel certains messages permettent de demander une mesure.

On peut ainsi imaginer un échange de la forme:

*Origine: A, Topic: "M", Message = "{ "distance_UWB" : { "target" : "A", ... (autre paramètres) } }"*

*Origine: M, Topic: "Distance", Message = "{ "origin" : "M", "target" : "A", "distance" : 5, ... (autre mesures, statistiques, etc) }"*

Dans cet exemple :

- A demande une mesure de distance avec A dans le topic « M » (topic auquel seul le mobile M est abonné) ;
- M effectue une mesure de distance avec A suivant les paramètres détaillés dans ce message ;
- M partage le résultat d'une mesure de distance entre M et A dans le topic "Distance" ;
- A, et tous autres clients abonnés au topic "Distance" connaissent désormais la distance entre M et A.

En ce qui concerne les messages UWB, certaines méthodes différentes peuvent être utilisées pour transmettre les informations nécessaires. On peut par exemple utiliser une trame de N+1 octets, structurée de la manière suivante :

- Octets 0-9 :

    o Octets 0-1 : « frame control », par exemple portant la valeur 0x8841,
    o Octet 2 : numéro de séquence,
    o Octets 3-4: identifiant « Personal Area Network" abrégé
    o Octets 5-6: adresse de destination abrégée
    o Octets 7-8: adresse d'origine abrégée
    o Octets 9 et suivant: charge utile

- A partir de l'octet 9 :

    ∘ octet 9 a pour valeur la taille du message restant ;
    o l'octet 10 a pour valeur un Code représentant le type de message (demande de mesure, résultats de mesure, différentes étapes du TWR, ...) ;
    o les octets 11 à N ont pour valeurs des données additionnelles suivant le type de message (estampille, mesure de distance, mesure d'angle, ...).

Les étapes du procédé de positionnement ne sont pas nécessairement mises en oeuvre dans une unité de traitement d'un équipement intégrant une ancre UWB.

Les étapes du procédé de positionnement peuvent être mises en oeuvre dans une unité de traitement d'un équipement mobile, et par exemple dans une unité de traitement 15 du smartphone 2 (qui comprend au moins un composant de traitement et au moins une mémoire).

Dans ce cas, l'unité de traitement 15 est agencée pour :

- faire évaluer, par l'équipement 3A intégrant l'ancre A, en utilisant des premiers signaux UWB, une position $P_{MA}$ du smartphone 2 dans un repère RA défini à partir d'une position de l'ancre A ;
- faire évaluer, par l'équipement 3A intégrant l'ancre A et/ou par un équipement 3B intégrant l'ancre B et/ou par le smartphone 2, une position $P_B$ de l'ancre B, en utilisant des deuxièmes signaux UWB si le smartphone 2 est situé à portée UWB de l'ancre B, ou bien en utilisant des signaux Wi-Fi sinon ;

   - déduire de la position $P_{MA}$ et de la position $P_B$ une position $P_{BA}$ de l'ancre B dans le repère RA.

Dans d'autres modes de réalisation, un contrôleur 16, intégré dans un équipement quelconque qui n'est pas l'une des ancres ni le smartphone 2, peut piloter l'ancre A, l'ancre B et le smartphone 2. Ce contrôleur 16 centralise les différents résultats des opérations réalisées par l'ancre A, l'ancre B et le smartphone 2 afin de déterminer la distance entre l'ancre A et l'ancre B, et de positionner de manière absolue l'ancre A et l'ancre B.

Le contrôleur 16 comprend alors une unité de traitement 17 (qui comprend au moins un composant de traitement et au moins une mémoire) agencée pour :

- faire évaluer par un équipement 3A pouvant intégrer une ancre A, en utilisant des premiers signaux UWB, une position $P_{MA}$ du smartphone 2 dans un repère RA défini à partir d'une position de l'ancre A ;
- faire évaluer, par l'équipement 3A pouvant intégrer l'ancre A et/ou par un équipement 3B pouvant intégrer une ancre B et/ou par le smartphone 2, une position $P_B$ de l'ancre B, en utilisant des deuxièmes signaux UWB si le smartphone 2 est situé à portée UWB de l'ancre B, ou bien en utilisant des signaux Wi-Fi sinon ;
- déduire de la position $P_{MA}$ et de la position $P_B$ une position $P_{BA}$ de l'ancre B dans le repère RA.

Les étapes du procédé de positionnement peuvent aussi être mises en oeuvre dans plusieurs équipements distincts.

Bien entendu, l'invention n'est pas limitée aux modes de réalisation décrits mais englobe toutes variantes entrant dans le champ de l'invention telle que définie par les revendications.

L'architecture des ancres UWB peut être différente de celle décrite ici. Les ancres ne sont pas nécessairement toutes identiques. Les modules de communication UWB et les modules de communication Wi-Fi ne sont pas nécessairement identiques.

Les ancres ne sont pas nécessairement intégrées dans des équipements qui remplissent d'autres fonctions : les ancres peuvent être intégrées dans des équipements individuels dédiés à la fonction d'ancre. Dans ce cas, l'ancre A et l'ancre B sont intégrées dans des équipements qui intègrent aussi un module de communication Wi-Fi.

Lorsque toutes ou certaine(s) étapes du procédé de positionnement sont mises en oeuvre dans une unité de traitement d'un équipement intégrant une ancre, l'unité de traitement n'est pas nécessairement intégrée dans l'ancre elle-même. Par exemple, dans l'équipement 3A visible sur la figure 1, l'unité de traitement 7 qui met en oeuvre une ou plusieurs étapes du procédé de positionnement peut être située dans l'équipement 3A à l'extérieur de l'ancre A.

L'équipement mobile n'est pas nécessairement un smartphone, mais pourrait être par exemple une montre connectée ou une tablette.

**Revendications**

1. Procédé de positionnement d'une ancre B dans un repère RA défini à partir d'une position d'une ancre A, l'ancre A et l'ancre B étant des ancres UWB (1), qui comprennent chacune un module de communication UWB (4), qui sont intégrées chacune dans un équipement (3A, 3B) comprenant un module de communication Wi-Fi (6), et qui sont à portée Wi-Fi l'une de l'autre,

   le procédé de positionnement utilisant un équipement mobile (2) comprenant un module de communication UWB (5) et un module de communication Wi-Fi (10), et qui est situé à portée UWB au moins de l'ancre A et à portée Wi-Fi de l'ancre A et de l'ancre B,
   le procédé de positionnement comprenant les étapes de :

- faire évaluer, par l'équipement (3A) intégrant l'ancre A, en utilisant des premiers signaux UWB, une position $P_{MA}$ de l'équipement mobile (2) dans le repère RA ;
- faire évaluer, par l'équipement (3A) intégrant l'ancre A et/ou par l'équipement (3B) intégrant l'ancre B et/ou par l'équipement mobile (2), une position $P_B$ de l'ancre B, en utilisant des deuxièmes signaux UWB si l'équipement mobile (2) est situé à portée UWB de l'ancre B, ou bien en utilisant des signaux Wi-Fi sinon ;
- déduire de la position $P_{MA}$ et de la position $P_B$ une position $P_{BA}$ de l'ancre B dans le repère RA.

**2.** Procédé de positionnement selon la revendication 1, dans lequel le repère RA est un repère polaire ayant pour pôle l'ancre A, et dans lequel la position $P_{MA}$ est une position polaire, l'équipement (3A) intégrant l'ancre A étant agencé pour déterminer des coordonnées polaires de l'équipement mobile (2) dans le repère RA, et pour évaluer la position $P_{MA}$ à partir desdites coordonnées polaires.

**3.** Procédé de positionnement selon la revendication 2, dans lequel, si l'équipement mobile (2) est situé à portée UWB de l'ancre B, la position $P_B$ est une position polaire $P_{MB}$ dans un repère RM qui est un repère polaire ayant pour pôle l'équipement mobile (2), l'équipement mobile (2) étant alors agencé pour déterminer des coordonnées polaires de l'ancre B dans le repère RM, et pour évaluer la position $P_{MB}$ à partir desdites coordonnées polaires.

**4.** Procédé de positionnement selon la revendication 3, comprenant l'étape, pour obtenir la position $P_{BA}$, de déterminer des coordonnées polaires $(AB; \theta(N_A,AB))_{RA}$ de l'ancre B dans le repère RA.

**5.** Procédé de positionnement selon l'une des revendications précédentes, dans lequel, si l'équipement mobile (2) n'est pas situé à portée UWB de l'ancre B, la détermination de la position $P_B$ comprend les étapes de :

- faire mesurer par l'équipement (3A) intégrant l'ancre A ou par l'équipement (3B) intégrant l'ancre B, en utilisant des premiers signaux Wi-Fi, une distance $dist_{AB}$ entre l'ancre A et l'ancre B ;
- faire mesurer par l'équipement mobile (2) ou par l'équipement (3B) intégrant l'ancre B, en utilisant des deuxièmes signaux Wi-Fi, une distance $dist_{MB}$ entre l'équipement mobile et l'ancre B ;
- évaluer la position $P_B$ à partir de la distance $dist_{AB}$ et de la distance $dist_{MB}$.

**6.** Procédé de positionnement selon la revendication 5, dans lequel l'évaluation de la position $P_B$ comprend les étapes de :

- déterminer des coordonnées cartésiennes de l'équipement mobile (2) dans un repère cartésien ayant pour origine l'ancre A ;
- calculer, en utilisant les coordonnées cartésiennes de l'équipement mobile (2), le point d'intersection entre :

  ◦ un premier cercle ayant pour centre la position de l'ancre A et pour rayon la distance $dist_{AB}$ ;
  ◦ un deuxième cercle ayant pour centre la position de l'équipement mobile (2) et pour rayon la distance $dist_{MB}$ ;
  ◦ un troisième cercle ayant pour centre une nouvelle position de l'équipement mobile (2) suite à un déplacement de l'équipement mobile, et pour rayon une nouvelle distance $dist'_{MB}$ entre l'équipement mobile et l'ancre B suite au déplacement de l'équipement mobile.

**7.** Procédé de positionnement selon la revendication 5, dans lequel la distance $dist_{AB}$ et la distance $dist_{MB}$ sont estimées à partir de mesures de RSSI respectives.

**8.** Procédé de positionnement selon l'une des revendications précédentes, dans lequel chaque module de communication UWB (4, 5) comprend deux antennes (Ant1, Ant2), ledit module de communication UWB étant ainsi capable de mesurer un angle entre une droite (D) passant par ledit module de communication UWB et un autre module de communication UWB, et entre une droite (N) orthogonale à un plan dans lequel s'étendent lesdites antennes, ledit angle formant une coordonnée angulaire de l'autre module de communication UWB dans un repère polaire ayant pour pôle ledit module de communication UWB.

**9.** Equipement électrique (3A) comprenant une ancre A, un module de communication Wi-Fi (6), et une unité de traitement (7), l'ancre A étant une ancre UWB, l'unité de traitement (7) étant agencée pour :

- évaluer, en utilisant des premiers signaux UWB, une position $P_{MA}$ d'un équipement mobile (2) dans un repère RA défini à partir d'une position de l'ancre A, l'équipement mobile pouvant comprendre un module de communication UWB (5) et un module de communication Wi-Fi (10) et pouvant être situé à portée UWB de l'ancre A et à portée Wi-Fi de l'ancre A ;
- faire évaluer, par l'équipement (3A) intégrant l'ancre A et/ou par un équipement (3B) pouvant intégrer une ancre B et/ou par l'équipement mobile (2), une position $P_B$ de l'ancre B, qui est aussi une ancre UWB et qui peut être à portée Wi-Fi de l'ancre A, en utilisant des deuxièmes signaux UWB si l'équipement mobile (2) est situé à portée UWB de l'ancre B, ou bien en utilisant des signaux Wi-Fi sinon ;
- déduire de la position $P_{MA}$ et de la position $P_B$ une position $P_{BA}$ de l'ancre B dans le repère RA.

10. Equipement électrique selon la revendication 9, l'équipement électrique (3) étant un extendeur Wi-Fi.

11. Equipement électrique selon la revendication 9, l'équipement électrique (3) étant une passerelle résidentielle.

12. Equipement mobile (2) comprenant un module de communication UWB (5), un module de communication Wi-Fi (10), et une unité de traitement (15), et qui peut être situé à portée UWB au moins d'une ancre A et à portée Wi-Fi de l'ancre A et d'une ancre B, l'ancre A et l'ancre B étant des ancres UWB, l'unité de traitement étant agencée pour :

- faire évaluer, par un équipement (3A) pouvant intégrer l'ancre A, en utilisant des premiers signaux UWB, une position $P_{MA}$ de l'équipement mobile (2) dans un repère RA défini à partir d'une position de l'ancre A ;
- faire évaluer, par l'équipement (3A) pouvant intégrer l'ancre A et/ou par un équipement (3B) pouvant intégrer l'ancre B et/ou par l'équipement mobile (2), une position $P_B$ de l'ancre B, en utilisant des deuxièmes signaux UWB si l'équipement mobile (2) est situé à portée UWB de l'ancre B, ou bien en utilisant des signaux Wi-Fi sinon ;
- déduire de la position $P_{MA}$ et de la position $P_B$ une position $P_{BA}$ de l'ancre B dans le repère RA.

13. Equipement mobile selon la revendication 12, l'équipement mobile étant un smartphone.

14. Equipement (16) comprenant une unité de traitement (17) agencée pour :

- faire évaluer par un équipement (3A) pouvant intégrer une ancre A, en utilisant des premiers signaux UWB, une position $P_{MA}$ d'un équipement mobile (2) dans un repère RA défini à partir d'une position de l'ancre A ;
- faire évaluer, par l'équipement (3A) pouvant intégrer l'ancre A et/ou par un équipement (3B) pouvant intégrer une ancre B et/ou par l'équipement mobile (2), une position $P_B$ de l'ancre B, en utilisant des deuxièmes signaux UWB si l'équipement mobile (2) est situé à portée UWB de l'ancre B, ou bien en utilisant des signaux Wi-Fi sinon ;
- déduire de la position $P_{MA}$ et de la position $P_B$ une position $P_{BA}$ de l'ancre B dans le repère RA,
l'ancre A et l'ancre B étant des ancres UWB (1) qui peuvent être à portée Wi-Fi l'une de l'autre,
l'équipement mobile (2) pouvant comprendre un module de communication UWB (5) et un module de communication Wi-Fi (10), et pouvant être situé à portée UWB au moins de l'ancre A et à portée Wi-Fi de l'ancre A et de l'ancre B.

15. Programme d'ordinateur comprenant des instructions qui conduisent l'unité de traitement de l'équipement selon l'une des revendications 9 à 14 à exécuter les étapes du procédé de positionnement selon l'une des revendications 1 à 8.

16. Support d'enregistrement lisible par ordinateur, sur lequel est enregistré le programme d'ordinateur selon la revendication 15.

Fig. 1

Fig. 2

Fig. 3

Fig. 4

Fig. 5

Fig. 6

Fig. 7

Europäisches
Patentamt

European
Patent Office

Office européen
des brevets

# RAPPORT DE RECHERCHE EUROPEENNE

Numéro de la demande

**EP 23 18 0775**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2021/088616 A1 (HSIEH TA-TE [CN]) 25 mars 2021 (2021-03-25) * alinéas [0002] – [0044] * * figures 1-11 * ----- | 1-16 | INV. G01S5/00 G01S5/02 G01S13/76 G01S13/87 G01S13/02 |
| A | US 2022/137176 A1 (SILVERMAN MATTHEW AARON [US] ET AL) 5 mai 2022 (2022-05-05) * alinéas [0002], [0013] – [0150] * * figures 1-10 * ----- | 1-16 | |

**DOMAINES TECHNIQUES RECHERCHES (IPC)**

**G01S**

Le présent rapport a été établi pour toutes les revendications

| Lieu de la recherche | Date d'achèvement de la recherche | Examinateur |
|---|---|---|
| **Munich** | **30 octobre 2023** | **Kruck, Peter** |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.......................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

**EP 23 18 0775**

**30-10-2023**

| Document brevet cité au rapport de recherche | Date de publication | Membre(s) de la famille de brevet(s) | Date de publication |
|---|---|---|---|
| US 2021088616 A1 | 25-03-2021 | CN 110572811 A | 13-12-2019 |
| | | US 2021088616 A1 | 25-03-2021 |
| US 2022137176 A1 | 05-05-2022 | AUCUN | |

EPO FORM P0460